# FASCICULE DE BREVET EUROPEEN

(11) **EP 1 425 714 B1**
(45) Date de publication et mention de la délivrance du brevet: **02.08.2006**
(21) Numéro de dépôt: 02777434.8
(22) Date de dépôt: 13.09.2002
(51) Int. Cl.: G06K 19/077

(54) **CARTE A PUCE SANS CONTACT OU HYBRIDE CONTACT-SANS CONTACT A TENUE RENFORCEE DU MODULE ELECTRONIQUE**
KONTAKTLOSE ODER KOMBINIERTE KONTAKTLOSE/KONTAKTBEHAFTETE CHIPKARTE MIT VERSTÄRKTER MONTAGE DES CHIPMODULS
CONTACT-FREE OR HYBRID CONTACT-CONTACT-FREE SMART CARD WITH ENHANCED STRENGTH OF THE ELECTRONIC MODULE

(30) Priorité: 14.09.2001 FR 0111918; 20.02.2002 FR 0202161
(43) Date de publication de la demande: 09.06.2004
(73) Titulaire: ASK S.A., 06906 Sophia Cedex (FR)
(72) Inventeur: HALOPE, Christophe, F-06400 Cannes (FR)
(86) Numéro de dépôt international: PCT/FR2002/003129
(87) Numéro de publication internationale: WO 2003/025850

(56) Documents cités:
- US-A- 4 450 024
- US-A1- 2001 002 035
- US-A1- 2001 006 194
- US-A1- 2001 012 682

## Description

### Domaine technique

La présente invention concerne les cartes à puce hybrides contact-sans contact et concerne en particulier une carte à puce de ce type à tenue renforcée du module électronique.

### Etat de la technique

La carte à puce sans contact est un système de plus en plus utilisé dans différents secteurs. Ainsi, dans le secteur des transports, la carte à puce sans contact a été développée comme moyen d'accès. C'est le cas également du porte-monnaie électronique. De nombreuses sociétés ont également développé des systèmes d'identification de leur personnel utilisant les cartes à puce sans contact.

L'échange d'informations entre une carte sans contact et le lecteur associé s'effectue par couplage électromagnétique à distance entre une antenne logée dans la carte et une antenne située dans le lecteur. Pour élaborer, stocker et traiter les informations une puce est disposée à l'intérieur de la carte sur un support sur lequel elle est connectée à l'antenne sérigraphiée.

Il existe aussi des cartes à puce hybrides contact-sans contact qui peuvent fonctionner comme cartes à puce classiques ou comme cartes à puce sans contact. Ces cartes comportent un module électronique composé d'une puce et d'un circuit double face dont les plages de contact de l'une des faces affleurent à la surface d'une des faces du corps de la carte.

Il existe un certain nombres de procédés permettant de fabriquer des cartes à puce sans contact ou hybrides. Un premier type de carte est une carte monobloc dans laquelle le support d'antenne en matière plastique, est inséré entre deux couches en matière plastique (PVC, PET, PC, acrylonitrile-butadiène-styrène (ABS)...) constituant les corps de carte supérieur et inférieur et thermosoudées par lamination sous pression à chaud. Le module est connecté à l'antenne par une colle conductrice ou équivalent qui permet d'établir le contact ohmique.

Ce type de carte possède une grande rigidité d'ensemble. Par conséquent, lorsque la carte est soumise à des contraintes mécaniques de flexion ou/et de torsion, les contraintes sont immédiatement transmises à la puce et plus particulièrement aux points de colle assurant les connexions puce/antenne ou module/antenne. Ces contraintes appliquées volontairement ou involontairement peuvent provoquer la rupture des connexions et donc la panne de la carte sans que celle-ci soit marquée.

Cette caractéristique se révèle être l'inconvénient majeur des cartes sans contact ou hybrides. En effet, il est relativement aisé pour un utilisateur malhonnête de détruire la carte aussi proprement que possible, par pliages intensifs répétés. Lorsqu'il s'agit d'une carte vendue avec un crédit (cartes de téléphone, cartes de transport en commun, cartes de paiement aux gares de péages autoroutiers) et que ce crédit est écoulé ou quasiment écoulé, cela lui permet de faire échanger ou rembourser la carte auprès de l'organisme émetteur sans que l'on puisse prouver, à posteriori, l'intention de frauder.

Pour pallier cet inconvénient majeur, on a pensé à sérigraphier l'antenne sur un support en matière fibreuse de type papier placé entre les deux corps de carte constitués d'au moins une couche de matière plastique. Ce type de procédé est décrit en détail dans les documents US 2001/006194, US 2001/012682 et US 2001/002035 de la demanderesse. Une étape de lamination à chaud et sous pression permet de souder les différentes couches entre elles, le PVC fluidifié d'un des corps de carte venant emprisonner l'encre sérigraphiée de l'antenne. Un procédé de fabrication de cartes à puce utilisant la lamination est également décrit dans le document US 4,450,024.

Le support en papier a l'avantage de donner à la carte la capacité, lorsque celle-ci est soumise à un pliage, de se délaminer à l'endroit où s'exercent les contraintes générées par le pliage, ce phénomène est mis en évidence par la présence de soudures dans les coins de la carte qui transmettent les contraintes mécaniques à l'intérieur de la carte tel que définit dans le document US 2001/006194. La délamination du papier permet ainsi de mettre en évidence, à posteriori, un acte de dégradation volontaire, la carte conservant la trace du pliage.

Cependant, ce type de carte présente l'inconvénient de n'offrir qu'une tenue fragile du module électronique. En effet, si le support d'antenne en papier offre l'avantage de garder "en mémoire" les pliures de la carte, il confère à la carte un manque de cohésion interne favorisant après de multiples pliures la délamination du papier sous le ou les joints de colle tenant le module sur la carte et donc à la verticale de la partie la moins épaisse du corps de carte, provoquant par conséquent la déconnexion du module électronique et de l'antenne.

### Exposé de l'invention

C'est pourquoi le but de l'invention est de fournir une carte à puce hybride avec support d'antenne en matière fibreuse du type papier offrant une tenue renforcée du module pour résister à la déconnexion et à l'arrachement en cas de pliages intensifs.

L'objet de l'invention est donc une carte à puce selon la revendication 1. La carte comprend une antenne sur un support en matière fibreuse de type papier, deux corps de carte de chaque côté du support constitué chacun d'au moins une couche de matière plastique possédant une température de fluidification peu élevée, et un module électronique comprenant une puce connectée à l'antenne, le module étant logé dans une cavité percée à travers l'un des corps de carte et le support d'antenne, l'ensemble formé par le support d'antenne et les deux corps de carte étant soudé par lamination sous pression à chaud. Le support en matière fibreuse comprend au moins un évidement situé en superposition des plots de colle fixant le module au corps de carte de sorte que les couches en matière plastique des corps de carte entrent en contact intime par l'évidement lors de la lamination, l'évidement ainsi rempli formant une soudure entre les corps de carte renforçant ainsi la tenue du module.

### Description brève des figures

Les buts, objets et caractéristiques de l'invention apparaîtront plus clairement à la lecture de la description qui suit faite en référence aux dessins dans lesquels :
la figure 1 représente le support d'antenne d'une carte à puce hybride contact - sans contact selon l'invention,
la figure 2 est une coupe transversale de la carte à puce représentée sur la figure 1, selon l'axe A-A,
la figure 3 est une vue de face des évidements et de l'emplacement du module dans le support d'antenne pour la carte représentée sur la figure 1.

### Description détaillée de l'invention

La carte à puce hybride contact sans contact comporte un module électronique composé d'une puce électronique 26 et d'un circuit double face 10 dont une face est affleurante à une des faces de la carte. L'antenne de la carte, généralement sérigraphiée sur un support en matière fibreuse 12 comporte un certain nombre de spires 18 d'encre conductrice et deux plots de connexion 11 et 13 destinés à être connectés à la puce donc au module électronique. Le support d'antenne comporte deux évidements 14 et 16 qui sont élaborés de préférence après la sérigraphie de l'antenne. La forme des évidements ainsi que leur emplacement sont décrits en détail dans la suite de la description.

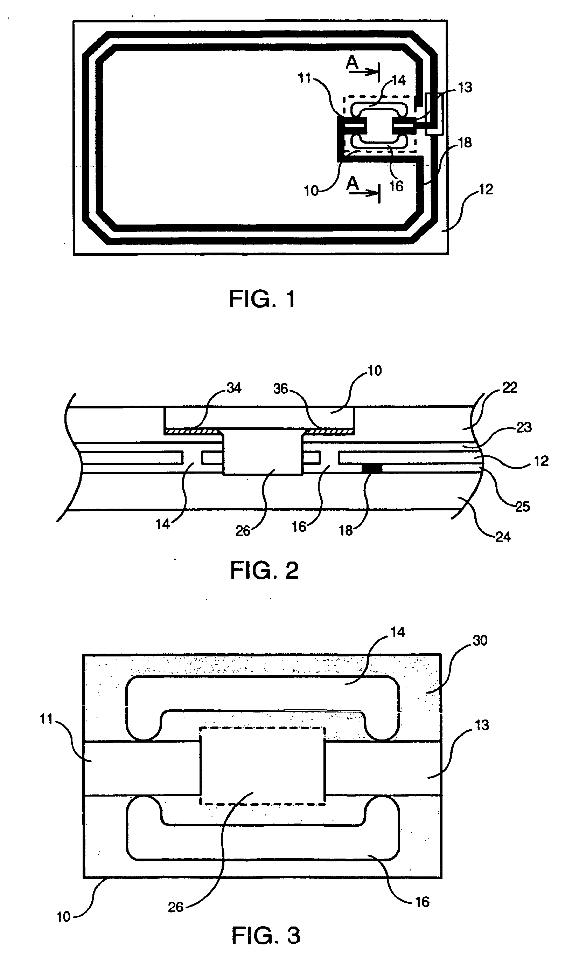

Selon la figure 2, représentant une coupe transversale selon l'axe A-A d'une partie de la carte représentée à la figure 1, la carte est composée de plusieurs couches dans son épaisseur. Dans un mode de réalisation préférentiel, le support d'antenne 12 est inséré entre un corps de carte inférieur, composé des couches 22 et 23, et un corps de carte supérieur, composé des couches 24 et 25. Les corps de carte inférieur et supérieur sont en matière plastique de type polychlorure de vinyle (PVC) ou polyester (PET, PETG) ou polycarbonate (PC) ou encore acrylonitrile butadiène styrène (ABS). Selon un mode de réalisation préféré les corps de carte sont en PVC et sont constitués chacun d'une couche externe de PVC rigide 22 ou 24 et d'une couche interne de PVC mou 23 ou 25. Le PVC constituant la couche de PVC mou, en contact avec l'antenne, a un point Vicat (température à partir de laquelle le PVC passe d'un état rigide à un état caoutchouteux) inférieur au point Vicat de la couche constituant la couche de PVC rigide.

L'assemblage des couches constituant la carte est effectué selon un procédé de lamination à chaud à une température spécifique et sous pression. Sous l'action combinée de la chaleur et de la pression, la couche externe de PVC se ramollit seulement, alors que la couche interne constituée d'un PVC de point Vicat inférieur se fluidifie. Le PVC ainsi fluidifié de la couche 25 vient emprisonner l'antenne dans la masse, et rentre en contact intime avec le PVC fluidifié de la couche 23 par les évidements 14 et 16 préalablement effectués dans le support de l'antenne 12, créant ainsi deux soudures entre les corps de carte inférieur et supérieur par le contact intime des deux couches internes 23 et 25.

Après l'assemblage des différentes couches constitutives de la carte, une cavité est percée, généralement par fraisage, dans la carte afin de loger le module électronique composé de la puce électronique 26 et du circuit double face 10. La forme de la cavité est telle qu'elle comprend une partie centrale plus petite pour recevoir la puce 26 et une partie extérieure plus grande effectuée dans une partie de l'épaisseur de la couche 22 du corps de carte pour recevoir le circuit double face.

Le module électronique est inséré dans la cavité et fixé par collage dans la partie la plus grande de la cavité. Ainsi, deux plots de colle 34 et 36 de type cyanoacrylate lient le circuit double face du module électronique à la couche externe 22 du corps de carte et se superposent aux évidements 14 et 16 effectués préalablement dans le support d'antenne 12. Les plots de colle 34 et 36 sont donc positionnés à la verticale de l'endroit où l'épaisseur du corps de carte 22 est la moins épaisse et donc se situent à la verticale des évidements 14 et 16 remplis de PVC et formant deux soudures entre les corps de carte inférieur et supérieur, renforçant ainsi la tenue du module sur son support.

La connexion de la puce aux plots de l'antenne 11 et 13 est assuré grâce à une couche de colle conductrice, non représentée sur la figure et placé avant l'insertion du module électronique dans sa cavité.

Selon la figure 3, l'emplacement des évidements 14 et 16 sur le support d'antenne sont tels qu'ils sont placés de part et d'autre des plots de connexion 11 et 13 et de préférence au milieu de la face 30 du circuit double face 10 destinée à être collée sur la carte et représentée en grisé sur la figure. Cependant, les évidements peuvent être légèrement décalés par rapport à la position décrite sur la figure tout en restant superposés à la face 30 du module électronique sans pour autant sortir du cadre de l'invention. Dans tous les cas, la largeur des évidements ne doit pas être trop importante. Dans ce but, la superficie des évidements ne doit pas excéder la superficie de la face à coller 30 du module afin d'obtenir le remplissage total des évidements par le PVC fluidifié des couches 23 et 25 lors de la lamination des corps de carte entre eux.

Le module électronique étant placé de façon symétrique de part et d'autre des plots de connexion 11 et 13, les évidements 14 et 16 sont de préférence symétriques par rapport aux plots de connexion 11 et 13 et sont de préférence de forme identique. En outre, de façon à améliorer la tenue du module sur la carte, le contour extérieur des évidements 14 et 16 épouse le plus possible le contour extérieur des plots de colle 34 et 36.

Pour une carte hybride, les évidements ne doivent pas comporter d'angle, ceci pour plusieurs raisons. D'une part pour une raison de facilité des découpes. En effet, les découpes d'angles peuvent créer des point de retenue du papier à enlever sur son support, alors que les découpes de forme arrondie ne posent jamais ce genre de problème. De plus, lorsque le corps de carte est imprimé avec des aplats, les découpes sont révélées à la lamination par un rapprochement des points d'impression situé au dessus des évidements résultant en une teinte plus foncée à l'emplacement des évidements. Par conséquent l'esthétique d'une forme arrondie vue à travers le PVC transparent est plus agréable qu'une forme comportant des angles.

Bien qu'il soit préférable de disposer de deux évidements de part et d'autre du module pour renforcer sa tenue mécanique tel que décrit ci-dessus, il est possible de disposer d'un seul évidement ou de plus de deux évidements sans sortir du cadre de l'invention.

## Revendications

1. Carte à puce comprenant une antenne (18) sur un support en matière fibreuse de type papier (12), deux corps de carte de chaque côté dudit support constitué chacun d'au moins une couche de matière plastique possédant une température de fluidification peu élevée, et un module électronique comprenant une puce (26) connectée à l'antenne, ledit module étant logé dans une cavité percée à travers l'un desdits corps de carte et ledit support d'antenne (12), l'ensemble formé par le support d'antenne et les deux corps de carte étant soudé par lamination sous pression à chaud ;
ladite carte étant **caractérisée en ce que** ledit support en matière fibreuse comprend un ou plusieurs évidements (14, 16) situés en superposition des plots de colle (34, 36) fixant ledit module audit corps de carte, de sorte que les couches (23, 25) en matière plastique desdits corps de carte entrent en contact intime par lesdits évidements lors de la lamination, lesdits évidements ainsi remplis formant une soudure entre les corps de carte renforçant ainsi la tenue du module.

2. Carte à puce selon la revendication 1, dans laquelle la puce (26) dudit module électronique est connectée à l'antenne par deux plots de connexion (11, 13).

3. Carte à puce selon la revendication 1 ou 2, dans laquelle lesdits évidements (14, 16) sont situés de part et d'autre des plots de connexion (11, 13) de l'antenne (18).

4. Carte à puce selon la revendication 1, 2 ou 3, dans laquelle lesdits deux évidements (14, 16) sont de forme identique et sont symétriques par rapport aux plots de connexion (11, 13).

5. Carte à puce selon l'une des revendications 1 à 4, dans laquelle lesdits évidements (14, 16) ont des formes arrondies.

6. Carte à puce selon l'une des revendications 1 à 5, dans laquelle lesdits évidements (14, 16) ont été élaborés après la sérigraphie de l'antenne sur son support (12).

7. Carte à puce selon l'une des revendications 1 à 6 dans laquelle les deux corps de carte sont composés chacun de deux couches (22, 23) et (24, 25).

8. Carte à puce selon l'une des revendications 1 à 7 dans laquelle lesdites couches (23, 25) sont en PVC.

9. Carte à puce selon l'une des revendications 1 à 8, dans laquelle lesdits plots de colle (34, 36) sont en cyanoacrylate.

## Claims

1. A smart card including an antenna (18) on a support made of paper type fibrous material (12), two card bodies on each side of said support each made up of at least one layer of plastic material having a low fluidizing temperature, and an electronic module comprising a chip (26) connected to the antenna, said module being housed in a cavity made through one of said card bodies and said antenna support (12), the assembly formed by the antenna support and the two card bodies being welded together by hot-lamination under pressure;
said card being **characterised in that** said support made of fibrous material includes one or several recesses (14, 16) located such that they are superposed on the glue spots (34, 36) securing said module to said card body such that the plastic material layers (23, 25) of said card bodies come into close contact via said recesses during the lamination process, said recesses thus filled forming a weld between the card bodies thereby reinforcing the connection of the module.

2. The smart card according to Claim 1 in which the chip (26) of said electronic module is connected to the antenna through two bonding pads (11, 13).

3. The smart card according to Claim 1 or 2 in which said recesses (14, 16) are located on each side of the bonding pads (11, 13) of the antenna (18).

4. The smart card according to Claims 1, 2, or 3, in which said two recesses (14, 16) are identical in shape and are symmetrical in relation to the bonding pads (11, 13).

5. The smart card according to any of Claims 1 through 4, in which said recesses (14, 16) are round in shape.

6. The smart card according to any of Claims 1 through 5, in which said recesses (14, 16) have been made after the antenna has been screen-printed on its support (12).

7. The smart card according to any of Claims 1 through 6, in which the two card bodies are each made up of two layers (22, 23) and (24, 25).

8. The smart card according to any of Claims 1 through 7, in which said layers (23, 25) are made of PVC.

9. The smart card according to any of Claims 1 through 8, in which the glue used for said glue spots (34, 36) is cyanoacrylate.

## Patentansprüche

1. Chipkarte mit einer Antenne (18) auf einem Träger aus Papierfasermaterial (12), zwei Kartenkörpern auf jeder Seite des Trägers, die jeweils aus mindestens einer Kunststoffschicht mit einer niedrigen Verflüssigungstemperatur bestehen, und einem elektronischen Modul, das einen mit der Antenne verbundenen Chip (26) aufweist, wobei das Modul in einem in einem der Kartenkörper und im Antennenträger (12) ausgebildeten Hohlraum untergebracht ist und die durch den Antennenträger und die beiden Kartenkörper gebildete Anordnung durch Heißlaminieren unter Druck verschweißt ist;
**dadurch gekennzeichnet, dass** der Träger aus Fasermaterial eine oder mehrere Aussparungen (14, 16) enthält, die das Modul an dem Chipkörper befestigende Klebstoffflecken (34, 36) überlagern, so dass die Kunststoffmaterialschichten (23, 25) der Kartenkörper beim Laminieren durch die Aussparungen in innigen Kontakt kommen, wodurch die Aussparungen unter Bildung einer Schweißnaht zwischen den Kartenkörpers gefüllt werden und somit die Montage des Moduls verstärkt wird.

2. Chipkarte nach Anspruch 1, bei der der Chip (26) des elektronischen Moduls durch zwei Anschlusshöcker (11, 13) mit der Antenne verbunden ist.

3. Chipkarte nach Anspruch 1 oder 2, bei der sich die Aussparungen (14, 16) auf beiden Seiten der Anschlusshöcker (11, 13) der Antenne (18) befinden.

4. Chipkarte nach Anspruch 1, 2 oder 3, bei der die Aussparungen (14, 16) identisch ausgebildet und bezüglich der Anschlusshöcker (11, 13) symmetrisch sind.

5. Chipkarte nach einem der Ansprüche 1 bis 4, bei der die Aussparungen (14, 16) abgerundete Formen aufweisen.

6. Chipkarte nach einem der Ansprüche 1 bis 5, bei der die Aussparungen (14, 16) nach dem Siebdruck der Antenne auf ihren Träger (12) ausgearbeitet worden sind.

7. Chipkarte nach einem der Ansprüche 1 bis 6, bei der die beiden Kartenkörper jeweils aus zwei Schichten (22, 23) und (24, 25) bestehen.

8. Chipkarte nach einem der Ansprüche 1 bis 7, bei der die Schichten (23, 25) aus PVC bestehen.

9. Chipkarte nach einem der Ansprüche 1 bis 8, bei der die Klebstoffflecken (34, 36) aus Cyanacrylat bestehen.
